# EUROPÄISCHE PATENTSCHRIFT

(11) **EP 1 130 286 B1**
(45) Veröffentlichungstag und Bekanntmachung des Hinweises auf die Patenterteilung: **25.03.2009**
(21) Anmeldenummer: 01100609.5
(22) Anmeldetag: 11.01.2001
(51) Int. Cl.: F16H 25/18, F16K 31/00

(54) **Antriebsvorrichtung**
Driving mechanism
Mécanisme d'entrainement

(30) Priorität: 01.03.2000 DE 10009862
(43) Veröffentlichungstag der Anmeldung: 05.09.2001
(73) Patentinhaber: FESTO AG & Co. KG, 73734 Esslingen (DE)
(72) Erfinder: Godel, Martin, 73277 Owen/Tech (DE); Hoffmann, Markus, 72649 Wolfschlugen (DE)
(74) Vertreter: Abel, Martin

(56) Entgegenhaltungen:
- WO-A-88/00902
- WO-A-98/36192

## Beschreibung

Die Erfindung betrifft eine Antriebsvorrichtung, die beispielsweise auf dem Sektor der Pneumatik als Ventilantrieb eingesetzt werden kann.

Im Zusammenhang mit zur Steuerung von Fluidströmen dienenden Ventilen auf dem Sektor der Pneumatik werden bisher in aller Regel Ventilantriebe eingesetzt, die von Elektromagneten oder Piezowandlern gebildet sind. Derartige Antriebe sind zwar zur Übertragung hoher Kräfte in der Lage, erzeugen jedoch in der Regel nur Antriebsbewegungen mit relativ geringem Hub. Auch sind bei der konstruktiven Ausgestaltung hinsichtlich der Vorgabe des Kraft-Hub-Verhaltens enge Grenzen gesetzt, was das Einsatzspektrum beschränkt.

Es ist die Aufgabe der vorliegenden Erfindung, eine mit relativ einfachen Maßnahmen variabel gestaltbare Antriebsvorrichtung zu schaffen, die bei Bedarf die Realisierung von Antriebsbewegungen mit hoher Kraft und zugleich großem Hub gestattet.

Gelöst wird die Aufgabe durch eine Antriebsvorrichtung, die mindestens eine Antriebseinheit aufweist, die zwei zueinander beabstandete Beaufschlagungskörper enthält, an denen einander zugewandte Beaufschlagungsflächen vorgesehen sind, die in einer Antriebsrichtung divergieren und zwischen denen sich eine an den Beaufschlagungsflächen beider Beaufschlagungskörper anliegende Hubeinheit befindet, sowie mit Antriebsmitteln zum Hervorrufen einer gegenseitigen Annäherung der Beaufschlagungskörper und einer daraus resultierenden Verlagerung der Hubeinheit in der Antriebsrichtung entlang den Beaufschlagungsflächen zur Erzeugung einer abgreifbaren Antriebsbewegung.

Das Dokument WO 98/36192 stellt den nächstliegenden Stand der Technik dar. Es zeigt eine Antriebsvorrichtung mit mindestens einer Antriebseinheit, die zwei zueinander beabstandete Beaufschlagungskörper enthält, an denen einander zugewandte Beaufschlagungsfläche vorgesehen sind.

Die Antriebsvorrichtung enthält also mindestens eine Antriebseinheit, die über eine Hubeinheit verfügt, die zwischen sich voneinander entfernenden Beaufschlagungsflächen zweier beabstandeter Beaufschlagungskörper angeordnet ist. Durch mit einem oder beiden Beaufschlagungskörpern zusammenwirkende Antriebsmittel können die Beaufschlagungskörper derart relativ zueinander bewegt werden, dass sich die Beaufschlagungsflächen einander annähern. Auf Grund deren divergierendem Verlauf hat dies eine quer zur Annäherungsbewegung der Beaufschlagungsflächen gerichtete Verlagerung der Hubeinheit zur Folge, wobei die Verlagerungsrichtung als Antriebsrichtung bezeichnet sei. Die Hubeinheit wird durch die auf sie einwirkenden Beaufschlagungsflächen praktisch verdrängt, wobei eine Umlenkung der Kraftrichtung in die besagte Antriebsrichtung stattfindet. Die Verlagerung der Hubeinheit kann dann als Antriebsbewegung abgegriffen werden, welche unmittelbar oder mittelbar auf ein zu bewegendes Bauteil einwirkt, beispielsweise auf das zu betätigende Ventilglied eines Steuerventils.

Indem bei der Herstellung des Antriebsvorrichtung der Verlauf der Beaufschlagungsflächen nach Bedarf variabel vorgegeben werden kann, lassen sich relativ einfach Antriebsvorrichtungen mit einer anwendungsspezifisch angepassten Kraft-Hub-Kennlinie bereitstellen. Als Antriebsmittel lassen sich von Hause aus über einen nur geringen Hub verfügende, zugleich aber eine hohe Betätigungskraft liefernde Mittel einsetzen, wobei durch die Ausgestaltung der Beaufschlagungsflächen eine Hubübersetzung erhalten wird, die den an sich relativ kleinen Hub der Antriebsmittel in einen ausreichend großen Hub der abgreifbaren Antriebsbewegung umwandelt. Auf diese Weise eignet sich die Antriebsvorrichtung speziell auch für die Realisierung kleiner und kleinster Baugrößen, wobei als Antriebsmittel beispielsweise eine Piezowandler-Einrichtung vorgesehen werden kann. Alternativ wären auch andere Antriebsmittel denkbar, beispielsweise durch Fluidkraft betätigbare Antriebsmittel wie sie von der Anmelderin unter dem Begriff "Fluidic Muscle" vertrieben werden.

Die Antriebsvorrichtung hat den weiteren Vorteil, dass sie sich bei Bedarf so ausgestalten und betreiben lässt, dass sich ein stetiges Antriebsverhalten ergibt und stufenlos unterschiedliche Hubpositionen der Hubeinheit einstellbar sind.

Vorteilhafte Weiterbildungen der Erfindung gehen aus den Unteransprüchen hervor.

Die beiden Beaufschlagungskörper werden durch Aktivierung der Antriebsmittel zweckmäßigerweise ausgehend von einer Grundstellung einander angenähert, wobei die Beaufschlagungsfläche mindestens eines und vorzugsweise beider Beaufschlagungskörper derart ausgeführt sind, dass sich, in der Grundstellung betrachtet, ein mit Bezug zur erzeugten Antriebsrichtung geneigter Flächenverlauf ergibt.

Im einfachsten Fall sind die vorhandenen Beaufschlagungsflächen als Schrägflächen mit linearem Verlauf ausgeführt. Durch Vorgabe des Neigungswinkels bezüglich der Antriebsrichtung kann das Übersetzungsverhältnis bzw. das Kraft-Hub-Umsetzungsverhalten vorgegeben werden. Um besondere Antriebsbewegungen zu erhalten, können die Beaufschlagungsflächen auch mit einem gekrümmten Verlauf versehen werden, um durch einen Kurvenverlauf ein nicht lineares Bewegungsverhalten erzielen zu können.

Die Antriebsvorrichtung kann prinzipiell so ausgeführt werden, dass die Relativbewegung der beiden Beaufschlagungskörper durch die Bewegung nur eines Beaufschlagungskörpers erzeugt wird, wobei der andere Beaufschlagungskörper stillsteht und beispielsweise an einem zugeordneten Gehäuseteil fixiert ist. Bevorzugt wird jedoch eine Ausführungsform realisiert, die bei der Annäherungsbewegung eine gleichzeitige Bewegung beider Beaufschlagungskörper vorsieht.

Die gegenseitige Annäherungsbewegung der Beaufschlagungsflächen wird zweckmäßigerweise durch eine von den Antriebsmittels erzwungene Schwenkbewegung eines oder beider Beaufschlagungskörper erzeugt. Hierzu können die Beaufschlagungskörper in einer Lagerungszone relativ zueinander schwenkbeweglich miteinander gekoppelt sein und etwa gleichgerichtet von der Lagerungszone wegragen, wobei sie einen Beaufschlagungsraum begrenzen, in dem sich die bewegliche Hubeinheit befindet. Die Antriebsmittel werden in diesem Falle vorzugsweise im Bereich der Lagerungszone platziert, wobei in Abhängigkeit vom Einleitungsbereich der Antriebskräfte eine Zug- und/oder Druckbeaufschlagung vorgesehen sein kann, um die Schwenkbewegung mindestens eines Beaufschlagungskörpers herbeizuführen.

Besonders vorteilhaft ist die Installation einer Piezowandler-Einrichtung, die über wenigstens zwei Stapeltranslatoren verfügt, welche parallelgeschaltet sind und eine gleichzeitige gegensinnige Betriebsweise ermöglichen, so dass auf der einen Seite des Schwenkbereiches eine Zugkraft und auf der anderen Seite des Schwenkbereiches zugleich eine Druckkraft auf die Beaufschlagungskörper ausgeübt werden kann. Es könnte beispielsweise eine Piezowandler-Einrichtung eingesetzt werden, die von der Firma marco Systemanalyse und Entwicklung GmbH, 85221 Dachau, unter der Bezeichnung "Torque-Block" vertrieben wird.

Um die der Antriebsbewegung entgegengesetzte Rückstellbewegung der Hubeinheit zu realisieren, kann an Stelle eines aktiven Aktors auch eine passive Federeinrichtung eingesetzt werden. Diese könnte zwischen den Beaufschlagungskörpern wirken und/oder an der Hubeinheit angreifen.

Prinzipiell wäre es möglich, die Hubeinheit schlittenartig auszuführen, so dass sie im Rahmen einer Gleitbewegung auf den Beaufschlagungsflächen verlagert wird. Um eine zuverlässige Betriebsweise bei möglichst geringer Reibung zu erhalten, wird jedoch vorteilhaft eine als Wälzkörpereinheit ausgebildete Hubeinheit eingesetzt, die sich während ihrer Antriebsbewegung auf den Beaufschlagungsflächen der Beaufschlagungskörper abwälzt. Um hier ein Verklemmen zu vermeiden, verfügt die Wälzkörpereinheit insbesondere über zumindest zwei unabhängig voneinander drehbare Wälzkörper, die jeweils nur an einer der Beaufschlagungsflächen der beiden Beaufschlagungskörper anliegen, so dass sich der eine Wälzkörper an der Beaufschlagungsfläche des einen Beaufschlagungskörpers und der andere Wälzkörper an der Beaufschlagungsfläche des anderen Beaufschlagungskörpers abrollen kann.

Bei einer weiteren, besonders vorteilhaften Ausführungsform ist die Antriebsvorrichtung mit zwei Antriebseinheiten versehen, die zu einer Baueinheit zusammengefasst sind, wobei die Beaufschlagungskörper der beiden Antriebseinheiten derart paarweise zu zwei biegesteifen Beaufschlagungselementen zusammengefasst sind, dass die Beaufschlagungsflächen der beiden Antriebseinheiten zu voneinander abgewandten, entgegengesetzten Seiten hin auseinanderlaufen. Durch eine Verbindungsbrücke können die dann vorhandenen zwei Hubeinheiten derart bewegungsgekoppelt sein, dass bei der Antriebsbewegung der jeweils einen Hubeinheit die jeweils andere Hubeinheit mitgezogen wird und praktisch die Rückbewegung ausführt.

Die beiden Beaufschlagungselemente sind in einer Lagerungszone zweckmäßigerweise relativ zueinander schwenkbeweglich gelagert, so dass sich eine Wippenanordnung ergibt, wobei durch die Antriebsmittel eine wippenartige Bewegung eines oder beider Beaufschlagungselemente hervorgerufen werden kann, was stets die Annäherung der Beaufschlagungsflächen der einen Antriebseinheit und gleichzeitig das voneinander Entfernen der Beaufschlagungsflächen der anderen Antriebseinheit zur Folge hat. Bei einer besonders kostengünstigen Ausführungsform sind die Antriebseinheiten bezüglich der Lagerungszone spiegelbildlich ausgeführt.

Die erzeugte Antriebsbewegung kann an beliebiger Stelle der aus den Hubeinheiten und der Verbindungsbrücke gebildeten Bewegungseinheit abgegriffen werden. Besonders zweckmäßig ist allerdings der Kraftabgriff an der Verbindungsbrücke und dabei vorzugsweise in dem mittig zwischen den beiden Hubeinheiten liegenden Bereich.

Um beim Verlagern der Bewegungseinheit ein Verklemmen auszuschließen, hat es sich als zweckmäßig erwiesen, die Verbindungsbrücke in ihrer Hubrichtung derart federelastisch auszuführen, dass geringfügige Relativbewegungen der beiden Hubeinheiten in der erzeugten Bewegungsrichtung möglich sind. Hierdurch werden auch Fertigungstoleranzen kompensiert.

Nachfolgend wird die Erfindung anhand der beiliegenden Zeichnung näher erläutert. In dieser zeigen:

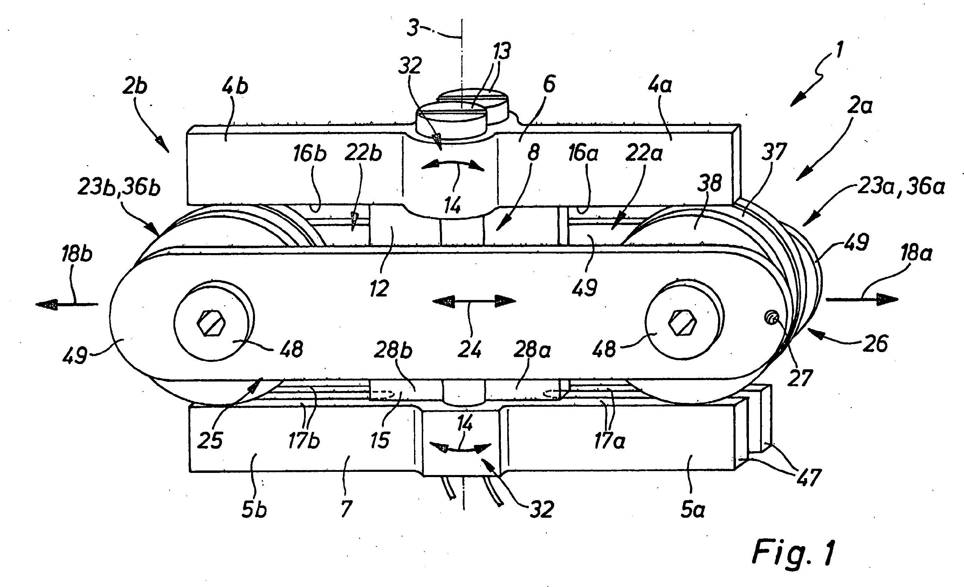

- Figur 1: eine bevorzugte Ausführungsform der erfindungsgemäßen Antriebsvorrichtung in perspektivischer Darstellung,
- Figur 2: die Antriebsvorrichtung aus Figur 1, auf dem Kopf stehend, wobei der im Vordergrund vorhandene Teil der Verbindungsbrücke sowie Teile der Hubeinheiten entfernt sind, um den Aufbau zu verdeutlichen.
- Figur 3: einen Querschnitt durch die Antriebsvorrichtung gemäß Schnittlinie III-III aus Figur 2,
- Figur 4: eine Draufsicht auf einen federelastischen Bestandteil der Verbindungsbrücke mit Blick gemäß Pfeil IV aus Figur 3, und
- Figuren 5 und 6: in schematischer Darstellung verschiedene Betriebsphasen der Antriebsvorrichtung, wobei strichpunktiert einige Modifikationen angedeutet sind, wie sie bei alternativen Ausführungsformen realisiert sein können.

Die in der Zeichnung abgebildete Antriebsvorrichtung 1 beinhaltet zwei zu einer Baueinheit zusammengefasste Antriebseinheiten 2a, 2b, die hinsichtlich einer eine Mittelachse 3 enthaltenden Ebene spiegelbildlich ausgebildet sind.

Jede Antriebseinheit 2a, 2b enthält einen länglichen, biegesteifen und vorzugsweise balkenähnlichen ersten Beaufschlagungskörper 4a, 4b, dem in der Richtung der Mittelachse 3 jeweils ein zweiter Beaufschlagungskörper 5a, 5b mit Abstand gegenüberliegt. Die ersten Beaufschlagungskörper 4a, 4b sind Bestandteile eines starren länglichen ersten Beaufschlagungselementes 6, die zweiten Beaufschlagungskörper 5a, 5b sind in einem vergleichbaren zweiten Beaufschlagungselement 7 zusammengefasst.

Die beiden Beaufschlagungselemente 6, 7 sind in einer Lagerungszone 8 relativ zueinander in einer das jeweilige Beaufschlagungselement 6, 7 enthaltenden Ebene schwenkbeweglich gelagert. Die möglichen Schwenkbewegungen sind durch Doppelpfeile 14 angedeutet. Die Lagerungszone befindet sich im Bereich der Mittelachse 3.

Die beiden Beaufschlagungselemente 6, 7 sind unter Zwischenschaltung eines Abstandshalters 12 unter Verwendung von Befestigungselementen 13 miteinander verspannt. Bei den Befestigungselementen 13 kann es sich wie abgebildet um Befestigungsschrauben handeln, die durch das eine Beaufschlagungselement 6 hindurchgreifen, beidseits des Abstandshalters 12 vorbeilaufen und in das zweite Beaufschlagungselement 7 eingeschraubt sind.

Bei dem Abstandshalter 12 handelt es sich vorliegend um elektrisch betätigbare Antriebsmittel 15, die in der Lage sind, die beiden Beaufschlagungselemente 6 zu der Schwenkbewegung 14 anzutreiben. Sie sind durch die Beaufschlagungselemente 6, 7 und die auf diese einwirkenden Befestigungselemente 13 vorgespannt. Es ergibt sich dabei bezogen auf die Lagerungszone 8 jeweils eine Wippbewegung der Beaufschlagungselemente 6, 7, die man daher auch als Wippenelemente bezeichnen könnte. Der Schwenkwinkel ist sehr gering und kann insbesondere durch die Elastizität der Beaufschlagungselemente 6, 7 und/oder der Befestigungselemente 13 gewährleistet werden.

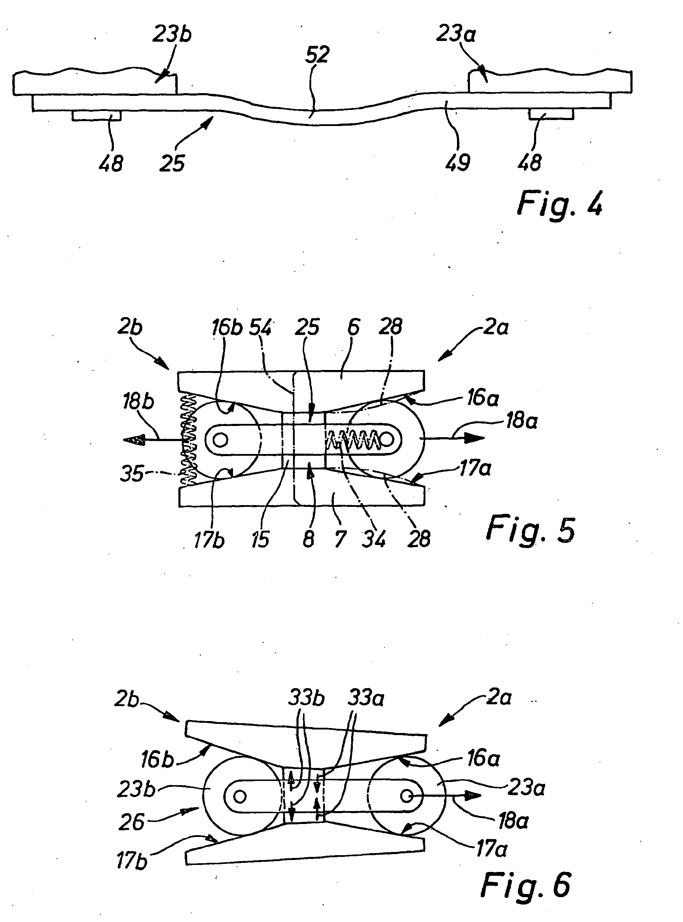

An den einander zugewandten Seiten eines jeweiligen ersten 4a, 4b und zweiten 5a, 5b Beaufschlagungskörpers sind einander zugewandte erste 16a, 16b und zweite 17a, 17b Beaufschlagungsflächen vorgesehen. Diese sind so ausgebildet, dass sich innerhalb einer jeweiligen Antriebseinheit 2a, 2b ein divergierender Verlauf der einander gegenüberliegenden ersten und zweiten Beaufschlagungsflächen 16a, 17a; 16b, 17b in einer von der Lagerungszone 8 wegweisenden Antriebsrichtung 18a, 18b ergibt. Die betreffenden Beaufschlagungsflächen laufen also zum freien Ende des jeweiligen Beaufschlagungselementes 6, 7 hin auseinander, wie dies auch gut aus Figur 5 ersichtlich ist, wo die Divergenz übertrieben dargestellt wurde.

Die etwa gleichgerichtet von der Lagerungszone 8 wegragenden Beaufschlagungskörper 4a, 5a; 4b, 5b einer jeweiligen Antriebseinheit 2a, 2b begrenzen zwischen sich einen auf der der Lagerungszone 8 entgegengesetzten Außenseite offenen Beaufschlagungsraum 22a, 22b, in dem jeweils eine Hubeinheit 23a, 23b angeordnet ist. Jede Hubeinheit 23a, 23b liegt gleichzeitig an den ersten und zweiten Beaufschlagungsflächen der zugeordneten Antriebseinheit 2a, 2b an. Der Kontakt ermöglicht jedoch eine Relativbewegung jeder Hubeinheit 23a, 23b, unter Beibehaltung des Berührkontaktes, entlang den jeweils zugeordneten Beaufschlagungsflächen 16a, 17a; 16b, 17b, wobei die durch einen Doppelpfeil angedeutete und nachfolgend als "Hubrichtung" bezeichnete Bewegungsrichtung 24 zur jeweiligen Antriebsrichtung 18a, 18b parallel verläuft.

Durch eine im Wesentlichen starre Verbindungsbrücke 25 sind die beiden Hubeinheiten 23a, 23b miteinander in der Hubrichtung 24 bewegungsgekoppelt. Die vorerwähnten Bestandteile bilden eine Bewegungseinheit 26, die stets nur zusammen in der Hubrichtung 24 verlagerbar ist.

Bei unbetätigten Antriebsmittels 15 nehmen die Beaufschlagungskörper 4a, 4b; 5a, 5b eine Grundstellung ein, die der aus Figur 5 ersichtlichen Stellung entsprechen kann. Werden die Antriebsmittel 15 betätigt, rufen sie bei einer der Antriebseinheiten eine gegenseitige Annäherung der betreffenden Beaufschlagungskörper und somit auch der zugeordneten Beaufschlagungsflächen hervor, wie dies aus Figur 6 ersichtlich ist. Dort ist ein Zustand gezeigt, bei dem die ersten und zweiten Beaufschlagungsflächen 16a, 17a der ersten Antriebseinheit 2a einander angenähert sind, was auf Grund der oben geschilderten, durch ein Verkippen hervorgerufenen Schwenkbewegung zur Folge hat, dass die ersten und zweiten Beaufschlagungsflächen 16b, 17b der zweiten Antriebseinheit 2b weiter auseinander klaffen.

Die Antriebsmittel 15 lassen sich auch so aktivieren, dass sich hinsichtlich der Vergrößerung und der Verringerung der sich gegenüberliegenden Beaufschlagungsflächen der beiden Antriebseinheiten 2a, 2b verglichen mit der Figur 6 gerade umgekehrte Verhältnisse einstellen.

Aus der gegenseitigen Annäherung der Beaufschlagungsflächen resultiert auf Grund des in der Grundstellung divergierenden Flächenverlaufes eine Verlagerung der zugeordneten Hubeinheit 23a, 23b in der betreffenden Antriebsrichtung 18a, 18b, wobei die Hubeinheit auf den zugeordneten Beaufschlagungsflächen entlang läuft. Je nach Schwenkrichtung der Beaufschlagungselemente 6, 7 wird also die eine oder andere Hubeinheit 23a, 23b nach außen gedrängt. Die entsprechende Bewegung der Hubeinheit, bei der es sich zweckmäßigerweise um eine reine Linearbewegung handelt, kann dabei zum Antreiben einer beliebigen Einrichtung bzw. eines beliebigen Bauteils abgegriffen werden.

Da die Hubeinheiten 23a, 23b über die Verbindungsbrücke 25 zu einer Bewegungseinheit 26 zusammengefasst sind, wird beim Verdrängen der jeweils einen Hubeinheit gleichzeitig die andere Hubeinheit mitgezogen und ins Innere des zugeordneten Beaufschlagungsraumes 22a, 22b in Richtung zur Lagerungszone 8 verlagert. Indem die Beaufschlagungsflächen der beiden Antriebseinheiten 2a, 2b identisch gestaltet sind, kann eine störungsfreie Bewegung garantiert werden.

Die erzeugte Antriebsbewegung lässt sich an jeder geeigneten Stelle der Bewegungseinheit 26 abgreifen. Allerdings empfiehlt sich ein Abgriff an der Verbindungsbrücke 25, die hierzu über geeignete Kraftabgriffsmittel 27 verfügen kann, beispielsweise über Befestigungsmittel, die das Anbringen eines zu bewegenden Bauteils gestatten.

Besonders empfehlenswert ist ein Kraftabgriff im Längsmittenbereich der Verbindungsbrücke 25 zwischen den beiden beabstandeten Hubeinheiten 23a, 23b.

Durch geeignete Auswahl des Verlaufes der Beaufschlagungsflächen 16, 17 - wenn auf übereinstimmende Bestandteile beider Antriebseinheiten 2a, 2b Bezug genommen wird, geschieht dies unter Weglassung der Buchstabenzusätze "a" und "b" - , lässt sich das Betriebsverhalten der Antriebsvorrichtung 1 anwendungsfall-spezifisch vorgeben. Es besteht insbesondere die Möglichkeit, die Kraft-Hub-Kennlinie der abgreifbaren Antriebsbewegung an den jeweiligen Anwendungsfall optimal anzupassen.

Es wäre beispielsweise möglich, in der Grundstellung gemäß Figur 5 gesehen, nur jeweils eine Beaufschlagungsfläche einer jeweiligen Antriebseinheit 2a, 2b mit einem geneigten Verlauf bezüglich der resultierenden Antriebsrichtung 18a, 18b zu versehen. Es hat sich jedoch herausgestellt, dass ein besseres Bewegungsverhalten daraus resultiert, wenn jeweils beide Beaufschlagungsflächen 16a, 17a; 16b, 17b einer jeweiligen Antriebseinheit 2a, 2b über einen Schrägverlauf verfügen, wobei vorzugsweise, bezüglich der gewünschten Hubrichtung 24, identische Neigungswinkel vorgesehen werden.

Es besteht ferner die Möglichkeit, den Flächenverlauf der Beaufschlagungsflächen in der jeweils zugeordneten Antriebsrichtung 18a, 18b, also zum freien Ende eines jeweiligen Beaufschlagungselementes 6, 7 hin, nicht linear gemäß den Abbildungen, sondern gekrümmt mit einem Bogen- bzw. Kurvenverlauf zu versehen, wie dies in Figur 5 bei 28 strichpunktiert angedeutet ist.

Je nachdem, wie die Antriebsvorrichtung 1 während ihrer Verwendung gehaltert wird - zweckmäßigerweise erfolgt eine Unterbringung in einem nicht näher dargestellten Gehäuse -, können bei Aktivierung der Antriebsmittel 15 entweder gleichzeitig beide Beaufschlagungselemente 6, 7 oder nur eines derselben eine Bewegung ausführen.

Die Antriebsvorrichtung 1 des Ausführungsbeispiels zeichnet sich durch die Möglichkeit aus, besonders kompakte Abmessungen zu realisieren. Dies hängt damit zusammen, dass als Antriebsmittel 15 eine sehr klein bauende Piezowandler-Einrichtung vorgesehen ist, die sich optimal in den Zwischenraum zwischen den beiden Beaufschlagungselementen 6, 7 integrieren lässt.

Bevorzug handelt es sich bei der Piezowandler-Einrichtung um eine Stapeltranslator-Bauform, wobei beim Ausführungsbeispiel zwei nebeneinander angeordnete Stapeltranslatoreinheiten 28a, 28b vorgesehen sind, die aber gleichwohl zu einer Baueinheit zusammengefasst sein können. Die beiden Stapeltranslatoreinheiten 28a, 28b sind so angeordnet, dass sie beidseits des Schwenkzentrums 32 eines jeweiligen Beaufschlagungselementes 6, 7 an diesen Beaufschlagungselementen angreifen. Bezogen auf den Bereich des Schwenkzentrums 32 befindet sich also die eine Stapeltranslatoreinheit 28a auf der der einen Hubeinheit 23a zugewandten Seite und die andere Stapeltranslatoreinheit 28b auf der der anderen Hubeinheit 23b zugewandten Seite.

Durch die Befestigungselemente 13 werden die Beaufschlagungselemente 6, 7 mit einer gewissen Vorspannung von entgegengesetzten Seiten her an die beiden Stapeltranslatoreinheiten 28a, 28b angedrückt. Im Betrieb sind die beiden Stapeltranslatoreinheiten 28a, 28b parallelgeschaltet, wobei sie gleichzeitig gegensinnig betätigt werden, so dass die eine Stapeltranslatoreinheit eine Verkürzung und die andere Stapeltranslatoreinheit eine Verlängerung erfährt. Die sich verlängernde Stapeltranslatoreinheit drückt auf die zugeordneten Beaufschlagungskörper, so dass diese auseinandergespreizt werden und nach dem Prinzip eines zweiarmigen Hebels eine Schwenkbewegung 14 mit daraus resultierender gegenseitiger Annäherung der Beaufschlagungskörper der anderen Antriebseinheit hervorrufen. Da die andere Stapeltranslatoreinheit gleichzeitig verkürzt wird, behindert sie die gegenseitige Annäherung der zugeordneten Beaufschlagungskörper nicht. Es kann sogar eine zugfeste Verbindung zwischen den Stapeltranslatoreinheiten und den Beaufschlagungskörpern vorgesehen sein, die zur Folge hat, dass die Beaufschlagungskörper durch die sich verkürzende Stapeltranslatoreinheit zusätzlich aktiv zueinander gezogen werden.

Als Piezowandler-Einrichtung könnte ein Block eingesetzt werden, der von der in 85221 Dachau ansässige Firma marco Systemanalyse und Entwicklung GmbH unter der Bezeichnung "Torque-Block" vertrieben wird (Veröffentlichungsnummer EP 0161750). Es handelt sich dabei praktisch um ein aktives Drehgelenk mit dem Flächenschwerpunkt als Drehachse. Dabei werden der Kippwinkel und die Steifigkeit insbesondere durch Variation von Länge, Dicke und Breite des Blocks nach Bedarf ausgewählt.

Insbesondere bei Ausführungsformen mit größerem Bauvolumen könnte an Stelle elektrischer Antriebsmittel auch der Einsatz von durch Fluidkraft betätigbaren Antriebsmitteln treten, beispielsweise von Linearantrieben oder von schlauchartig aufgebauten Zugelementen, die sich bei Innendruckbeaufschlagung verkürzen. Derartige Antriebe werden von der Anmelderin unter der Bezeichnung "Fluidic Muscle" vertrieben und gehen auch beispielsweise aus der EP 0 161 750 B1 hervor, so dass sich an dieser Stelle ein näheres Eingehen darauf erübrigt.

In Figur 6 ist durch Pfeile 33a, 33b nochmals die Drück- und Zugrichtung der Antriebsmittel verdeutlicht, wenn die Bewegungseinheit 26 in der ersten Antriebsrichtung 18a verlagert werden soll.

Die Antriebsvorrichtung 1 des Ausführungsbeispiels hat den Vorteil, dass Antriebsbewegungen in zwei entgegengesetzten Antriebsrichtungen 18a, 18b durch aktive Antriebsmittel 15 in Verbindung mit der Einleitung von externer Energie erzeugt und abgegriffen werden können. Möglich wäre es aber auch, die einer Antriebsbewegung entgegengesetzte Rückholbewegung durch passive Antriebsmittel zu realisieren, wobei insbesondere an eine Federeinrichtung gedacht ist, wie sie in Figur 5 strichpunktiert bei 34 angedeutet wurde. Sie ist in der Lage, die Bewegungseinheit 26 nach Deaktivierung der Antriebsmittel 15 aus der ausgelenkten Position in die Ausgangsposition zurückzuholen, wobei durch den Kontakt mit den zugeordneten Beaufschlagungsflächen eine gleichzeitige Rückstellung der Beauschlagungselemente 6, 7 in die Grundstellung erreicht wird.

Alternativ oder zusätzlich zu einer Federeinrichtung, die zwischen der Bewegungseinheit 26 und wenigstens einem Beaufschlagungskörper arbeitet, könnte auch eine in Figur 5 wiederum strichpunktiert angedeutete weitere Federeinrichtung 35 vorgesehen sein, die zwischen den zwei beabstandeten Beaufschlagungskörpern einer der Antriebseinheiten wirksam ist.

Prinzipiell wäre es möglich, die Hubeinheiten 23a, 23b als Gleiteinheiten auszuführen, die bei der Antriebsbewegung auf den zugeordneten Beaufschlagungsflächen 16, 17 abgleiten. Vorzugsweise kommt jedoch eine hinsichtlich des Reibwiderstandes wesentlich günstigere Ausgestaltung in Form von Wälzkörpereinheiten 36a, 36b zur Anwendung, wie dies beim Ausführungsbeispiel der Fall ist. Die Wälzkörpereinheiten 36a, 36b wälzen sich während der Antriebsbewegung auf den zugeordneten Beaufschlagungsflächen ab.

Um ein Blockieren zu verhindern, verfügen die Wälzkörpereinheiten 36 über zwei koaxial zueinander angeordnete und unabhängig voneinander drehbare Wälzkörper 37, 38, die jeweils nur an einer der Beaufschlagungsflächen 16, 17 der beiden zugeordneten Beaufschlagungskörper 4, 5 anliegen. Während also ein Wälzkörper ausschließlich mit der einen Beaufschlagungsfläche 16 kooperiert, arbeitet der andere Wälzkörper 38 ausschließlich mit der anderen Beaufschlagungsfläche 17 zusammen, woraus bei der Antriebsbewegung eine gegensinnige Rotationsbewegung der beiden Wälzkörper 37, 38 einer jeweiligen Wälzkörpereinheit 36 resultiert.

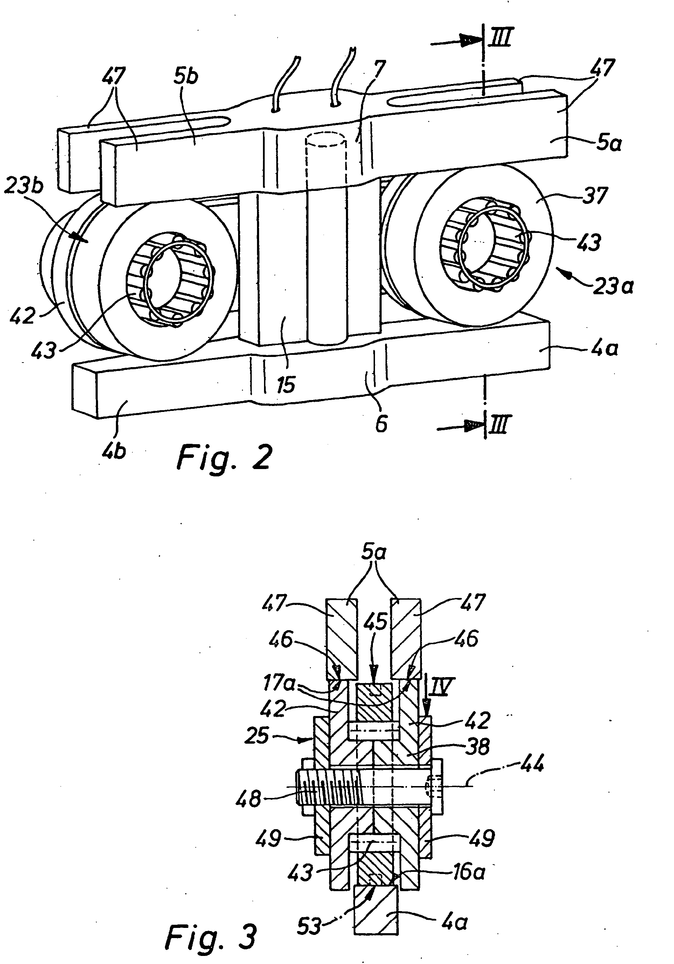

Eine bevorzugte Realisierungsform macht insbesondere auch die Schnittdarstellung der Figur 3 deutlich. Demnach ist ein rollen- oder radförmig gestalteter innerer Wälzkörper 37 vorhanden, der axial beidseits von zwei Teilen 42 eines äußeren Wälzkörpers 38 flankiert ist. Sieht man von der Unterteilung des äußeren Wälzkörpers 38 ab, so hat dieser im Querschnitt gesehen eine H-förmige Gestalt, wobei der innere Wälzkörper 37 koaxial auf dem Verbindungssteg des H sitzt. Durch die Unterteilung wird die Montage des inneren Wälzkörpers 37 ermöglicht, wobei die beiden Teile 42 zweckmäßigerweise identisch ausgebildet sind.

Zwischen den beiden Wälzkörpern 37, 38 ist eine vorzugsweise von einer Wälzlagereinrichtung gebildete Lagereinrichtung 43 koaxial platziert, beispielsweise in Form einer Lagerhülse, durch die die beiden Wälzkörper 37, 38 relativ zueinander radial abgestützt sind und die gleichzeitig eine freie Drehbeweglichkeit der beiden Wälzkörper 37, 38 relativ zueinander gewährleistet. Die Drehachse 44 fällt mit der Längsachse der Wälzkörper 37, 38 zusammen.

Mit einer nach radial außen orientierten ersten Lauffläche 45 steht der innere Wälzkörper 37 in ständigem Wälzkontakt mit der ersten Beaufschlagungsfläche 16 des ersten Beaufschlagungskörpers 4. Die mit dem zweiten Beaufschlagungskörper 5 zusammenwirkende zweite Lauffläche 46 des äußeren Wälzkörpers 38 ist in an den beiden Wälzkörperteilen 42 vorgesehene Flächenabschnitte aufgeteilt, die dementsprechend mit einer bezüglich der ersten Beaufschlagungsfläche 16 in Richtung der Drehachse 44 seitlich versetzten zweiten Beaufschlagungsfläche 17 zusammenwirken, die vorliegend an parallel zueinander verlaufenden Armen 47 des zweiten Beaufschlagungskörpers 5 anliegen. Diese Arme sind seitlich beabstandet, so dass eine Kollision mit dem der zwischenliegenden inneren Wälzkörper 37 vermieden wird. Die zweite Beaufschlagungsfläche ist folglich ebenfalls in beabstandet zueinander angeordnete Flächenabschnitte unterteilt.

Verbindungsmittel 48, beispielsweise Verbindungsschrauben, halten eine jeweilige Wälzkörpereinheit 36 zusammen und dienen zweckmäßigerweise gleichzeitig zur Fixierung der Verbindungsbrücke 25. Diese enthält beim Ausführungsbeispiel zwei zueinander parallele streben-, leisten- oder stabförmige Verbindungselemente 49, die von den beiden axialen Außenseiten her an eine jeweilige Hubeinheit 23 angesetzt sind und sich jeweils zwischen den beiden Hubeinheiten erstrecken. Dabei laufen sie außen an den im Bereich der Lagerungszone 8 angeordneten Antriebsmitteln 15 und Befestigungselementen 13 vorbei.

Untersuchungen haben ergeben, dass auch im Idealfall und bei identischer Ausgestaltung der Beaufschlagungsflächen 16, 17 eine Hubdifferenz zwischen den Hubeinheiten 23 auftritt. Um diese zu kompensieren, ist die Verbindungsbrücke in ihrer Hubrichtung 24 zweckmäßigerweise derart federelastisch ausgebildet, dass geringfügige Relativbewegungen der beiden Hubeinheiten 23 in der Hubrichtung 24 möglich sind. Beim Ausführungsbeispiel wird dies durch einen in der mit der Hubrichtung 24 zusammenfallenden Längsrichtung partiell leicht gebogenen Verlauf der aus federelastischem Material bestehenden Verbindungselemente 49 realisiert, von denen eines in Figur 4 abgebildet ist. Es versteht sich, dass sich der eine gewisse elastische Verformung ermöglichende Verformungsbereich 52 auch durch andere Gestaltungen der Verbindungsbrücke 25 realisieren lässt. Jedenfalls hat die elastische Ausgestaltung der Verbindungsbrücke 25 auch den Vorteil, Fertigungstoleranzen auszugleichen und dadurch einem versehentlichen Verklemmen der sich bewegenden Komponenten entgegenzuwirken.

Damit die Hubeinheiten 23 bei ihrer Verlagerung den zugeordneten Beaufschlagungsflächen 16, 17 exakt folgen, können bei Bedarf zusätzliche Führungsmittel 53 vorgesehen sein. Diese wirken zweckmäßigerweise zwischen einer jeweiligen Hubeinheit 23 und mindestens einem zugeordneten Beaufschlagungskörper 4, 5. Beim Ausführungsbeispiel sind die Führungsmittel 53 zwischen dem inneren Wälzkörper 37 und dem zugeordneten ersten Beaufschlagungskörper 4 wirksam, indem in der ersten Lauffläche 45 wenigstens eine Ringnut ausgebildet ist, in die ein an der ersten Beaufschlagungsfläche 16 vorgesehener Längsvorsprung eintaucht. Diese Anordnung kann auch umgekehrt getroffen werden.

Während die Antriebsvorrichtung 1 des Ausführungsbeispiels über zwei Antriebseinheiten 2a, 2b verfügt, wäre es selbstverständlich auch möglich, die Antriebsvorrichtung 1 mit nur einer Antriebseinheit auszustatten. Bezogen auf die schematische Darstellung der Figur 5 würde dann beispielsweise die zweite Antriebseinheit 2b entfallen und die erste Antriebseinheit 2a an der strichpunktierten Linie 54 im Bereich der Lagerungszone 8 enden. Die beiden Beaufschlagungskörper 4a, 5a könnten hier zusammen mit der Lagerungszone 8 eine etwa U-förmige Konfiguration bilden, wobei die einzige Hubeinheit 23a nach Veranlassung der Antriebsbewegung beispielsweise durch eine Federeinrichtung 34 in die Ausgangsstellung zurückgeholt wird. Im Übrigen gelten die bisherigen Erläuterungen zur Antriebsvorrichtung 1 hinsichtlich der mit nur einer Antriebseinheit ausgestatteten Antriebsvorrichtung in entsprechender Weise.

Abschließend erfolgt nochmals eine zusammenfassende Erläuterung der bevorzugten Ausgestaltung und Wirkungsweise der Antriebsvorrichtung. Demnach können die Antriebsmittel 15 von einem piezoelektrischen Biegeaktor gebildet sein, der bei Betätigung einen Biegewinkel erbringt. Das von diesem Aktor ausgehende Moment wird auf die biegesteifen, balkenförmigen Beaufschlagungselemente 6, 7 übertragen, deren innere Flächen sich schräg nach außen hin öffnen, so dass sich eine Art Schere bildet. Wird der Biegeaktor nun in eine Richtung ausgelenkt, ergibt sich auf einer Seite eine Vergrößerung und auf der anderen Seite eine Verkleinerung der von den inneren Flächen bzw. den Beaufschlagungsflächen 16, 17 gebildeten Winkel. Ein dort eingesetztes Rollensystem 36, das durch die Verbindungsbrücke 25 miteinander verbunden ist, führt so eine Linearbewegung im rechten Winkel zur Längserstreckung der Antriebsmittel 15 bzw. zur Mittelachse 3 aus. Dabei wird die Wälzkörpereinheit der sich schließenden Schere aktiv angetrieben. Durch die Ausgestaltung der Wälzkörpereinheiten mit einem Innenrad und einem zweiteiligen Außenrad, die über eine Lagereinrichtung 43 miteinander verbunden sind, wird die Eigenhemmung des Systems verhindert.

Bei dem gezeigten "Doppelscherenantrieb" sollte die Verbindungsbrücke 25 bei geradlinigem Schrägverlauf der Beaufschlagungsflächen 16, 17 elastisch ausgeführt werden, da sich die beiden Wälzkörpereinheiten 36 beim wechselseitigen Öffnen der beiden Antriebseinheiten relativ zueinander bewegen, was bei fehlender Kompensationsmöglichkeit zu einem Verklemmen des Antriebes führen könnte. Eine elastische Verbindungsbrücke 25 ist zudem auch vorteilhaft, um ein spielfreies Anliegen der Wälzkörper 37, 38 an den Beaufschlagungsflächen 16, 17 zu gewährleisten. Um die Relativbewegung der beiden Wälzkörpereinheiten 36 zu verhindern, könnte man allerdings auch besonders konturierte Beaufschlagungsflächen 16, 17 vorsehen, die nicht geradlinig sondern als Kurve verlaufen.

Die Antriebsvorrichtung kann als "Doppelscherenantrieb" mit zwei Antriebseinheiten oder auch als gegen eine Feder arbeitender "Einscherenantrieb" mit nur einer Antriebseinheit ausgeführt sein.

Die Antriebsvorrichtung lässt sich kompakt und einfach aufbauen. Außerdem lässt sich das Kraft-Hub-Verhältnis in Grenzen frei wählen und hängt im Wesentlichen vom Neigungswinkel der Beaufschlagungsflächen 16, 17 ab. Bei einem Einsatz eines Piezowandlers als Antriebsmittel lässt sich somit ein in der Leistungsaufnahme reduziertes und stetig arbeitendes Antriebssystem realisieren, das beispielsweise für den Antrieb in Ventilen gut geeignet ist.

## Patentansprüche

1. Antriebsvorrichtung, mit mindestens einer Antriebseinheit (2a, 2b), die zwei zueinander beabstandete Beaufschlagungskörper (4a, 5a; 4b, 5b) enthält, an denen einander zugewandte Beaufschlagungsflächen (16a, 17a; 16b, 17b) vorgesehen sind, die in einer Antriebsrichtung (18a, 18b) divergieren und zwischen denen sich eine an den Beaufschlagungsflächen (16a, 17a; 16b, 17b) beider Beaufschlagungskörper (4a, 5a; 4b, 5b) anliegende Hubeinheit (23a, 23b) befindet, sowie mit Antriebsmitteln (15) zum Hervorrufen einer gegenseitigen Annäherung der Beaufschlagungskörper (4a, 5a; 4b, 5b) und einer daraus resultierenden Verlagerung der Hubeinheit (23a, 23b) in der Antriebsrichtung (18a, 18b) entlang den Beaufschlagungsflächen (16a, 17a; 16b, 17b) zur Erzeugung einer abgreifbaren Antriebsbewegung.

2. Antriebsvorrichtung nach Anspruch 1, **dadurch gekennzeichnet, dass** die Beaufschlagungsflächen (16a, 17a; 16b, 17b) beider Beaufschlagungskörper (4a, 5a; 4b, 5b), in einer weiter voneinander entfernten Grundstellung gesehen, mit Bezug zur Antriebsrichtung (18a, 18b) einen geneigten Verlauf haben.

3. Antriebsvorrichtung nach Anspruch 1 oder 2, **dadurch gekennzeichnet, dass** die Beaufschlagungsfläche (16a, 17a; 16b, 17b) mindestens eines Beaufschlagungskörpers (4a, 5a; 4b, 5b) in der Antriebsrichtung (18a, 18b) einen linearen und/oder gekrümmten Verlauf besitzen.

4. Antriebsvorrichtung nach einem der Ansprüche 1 bis 3, **dadurch gekennzeichnet, dass** die Beaufschlagungskörper (4a, 5a; 4b, 5b) derart ausgeführt sind, dass sich bei der gegenseitigen Annäherungsbewegung der Beaufschlagungsflächen (16a, 17a; 16b, 17b) beide Beaufschlagungskörper (4a, 5a; 4b, 5b) bewegen.

5. Antriebsvorrichtung nach einem der Ansprüche 1 bis 4, **dadurch gekennzeichnet, dass** die durch die Antriebsmittel (15) hervorrufbare gegenseitig Annäherungsbewegung der Beaufschlagungsflächen (16a, 17a; 16b, 17b) durch eine erzwungene Schwenkbewegung mindestens eines Beaufschlagungskörpers (4a, 5a; 4b, 5b) erzeugt wird.

6. Antriebsvorrichtung nach Anspruch 5, **dadurch gekennzeichnet, dass** die beiden Beauschlagungskörper (4a, 5a; 4b, 5b) in einer Lagerungszone (8) relativ zueinander schwenkbeweglich miteinander gekoppelt sind und etwa gleichgerichtet von der Lagerungszone (8) wegragen, wobei sie einen die Hubeinheit (23a, 23b) zumindest teilweise aufnehmenden und auf der der Lagerungszone (8) entgegengesetzten Außenseite vorzugsweise offenen Beaufschlagungsraum (22a, 22b) begrenzen.

7. Antriebsvorrichtung nach Anspruch 5 oder 6, **dadurch gekennzeichnet, dass** zum Hervorrufen der Annäherungsbewegung der Beaufschlagungsflächen (16a, 17a; 16b, 17b) durch zwischen den Beaufschlagungskörpern (4a, 5a; 4b, 5b) platzierte Antriebsmittel (15) Zugkräfte und/oder Druckkräfte auf die Beaufschlagungskörper (4a, 5a; 4b, 5b) ausübbar sind, wobei die Einleitung der Zugkräfte auf der den Beaufschlagungsflächen (16a, 17a; 16b, 17b) zugewandten Seite und die Einleitung der Druckkräfte auf der von den Beaufschlagungsflächen (16a, 17a; 16b, 17b) abgewandten Seite des Schwenkzentrums (32) des mindestens einen Beaufschlagungskörpers (4a, 5a; 4b, 5b) erfolgt.

8. Antriebsvorrichtung nach Anspruch 7 in Verbindung mit Anspruch 6, **dadurch gekennzeichnet, dass** die Antriebsmittel (15) im Bereich der Lagerungszone (8) vorgesehen sind.

9. Antriebsvorrichtung nach einem der Ansprüche 1 bis 8, **dadurch gekennzeichnet, dass** zumindest die gegenseitige Annäherungsbewegung und vorzugsweise auch die entgegengesetzte Rückstellbewegung der beiden Beaufschlagungskörper (4a, 5a; 4b, 5b) von elektrisch und/oder von durch Fluidkraft betätigbaren Antriebsmitteln (15) hervorgerufen wird.

10. Antriebsvorrichtung nach Anspruch 9, **dadurch gekennzeichnet, dass** elektrisch betätigbare Antriebsmittel (15) in Gestalt einer Piezowandler-Einrichtung vorgesehen sind.

11. Antriebsvorrichtung nach Anspruch 10, **dadurch gekennzeichnet, dass** die Piezowandler-Einrichtung eine oder mehrere Stapeltranslatoreinheiten (28a, 28b) enthält.

12. Antriebsvorrichtung nach Anspruch 11, **gekennzeichnet durch** zwei parallel geschaltete und zur Erzeugung von zweckmäßigerweise sowohl Zugkräften als auch Druckkräften gleichzeitig gegensinnig betätigbare Stapeltranslatoreinheiten (28a, 28b).

13. Antriebsvorrichtung nach einem der Ansprüche 1 bis 12, **dadurch gekennzeichnet, dass** die Antriebsmittel (15) mindestens eine Federeinrichtung (34, 35) zur Erzeugung der der Antriebsbewegung entgegengesetzten Rückstellbewegung der Hubeinheit (23a, 23b) aufweist.

14. Antriebsvorrichtung nach Anspruch 13, **dadurch gekennzeichnet, dass** mindestens eine Federeinrichtung (34, 35) auf mindestens einen Beaufschlagungskörper (4a, 5a; 4b, 5b) und/oder auf die Hubeinheit (23a, 23b) einwirkt.

15. Antriebsvorrichtung nach einem der Ansprüche 1 bis 14, **dadurch gekennzeichnet, dass** die Hubeinheit (23a, 23b) von einer Wälzkörpereinheit (36a, 36b) gebildet ist, die sich bei der Antriebsbewegung auf den Beaufschlagungsflächen (16a, 17a; 16b, 17b) der Beaufschlagungskörper (4a, 5a; 4b, 5b) abwälzt.

16. Antriebsvorrichtung nach Anspruch 15, **dadurch gekennzeichnet, dass** die Wälzkörpereinheit (36a, 36b) über zumindest zwei unabhängig voneinander drehbare und beispielsweise rollenförmig gestaltete Wälzkörper (37, 38) verfügt, die jeweils nur an einer der Beaufschlagungsflächen (16a, 17a; 16b, 17b) der beiden Beaufschlagungskörper (4a, 5a; 4b, 5b) anliegen.

17. Antriebsvorrichtung nach Anspruch 16, **gekennzeichnet durch** eine koaxiale Anordnung der Wälzkörper (37, 38) der Wälzkörpereinheit (36a, 36b) und eine dementsprechend relativ zueinander seitlich versetzte Anordnung der Beaufschlagungsflächen (16a, 17a; 16b, 17b).

18. Antriebsvorrichtung nach einem der Ansprüche 1 bis 17, **gekennzeichnet durch** zwei zu einer Baueinheit zusammengefasste Antriebseinheiten (2a, 2b), deren Beaufschlagungskörper (4a, 5a; 4b, 5b) derart paarweise zu zwei biegesteifen Beaufschlagungselementen (6, 7) zusammengefasst sind, dass die Beaufschlagungsflächen (16a, 17a; 16b, 17b) der beiden Antriebseinheiten (2a, 2b) zu voneinander abgewandten, entgegengesetzten Seiten hin divergieren, und deren Hubeinheiten (23a, 23b) **durch** eine Verbindungsbrücke (25) derart bewegungsgekoppelt sind, dass bei der Antriebsbewegung der jeweils einen Hubeinheit (23a, 23b) die jeweils andere Hubeinheit (23b, 23a) mitgezogen wird.

19. Antriebsvorrichtung nach Anspruch 18, **dadurch gekennzeichnet, dass** die beiden Beaufschlagungselemente (6, 7) in einer im Übergangsbereich zwischen den beiden Antriebseinheiten (2a, 2b) vorgesehenen Lagerungszone (8) derart relativ zueinander schwenkbeweglich gelagert sind, dass mindestens ein Beaufschlagungselement (6, 7) durch die Antriebsmittel (15) zu einer wippenartigen Bewegung veranlasst werden kann, bei der sich die Beaufschlagungsflächen (16a, 17a; 16b, 17b) einander annähern und sich gleichzeitig die Beaufschlagungsflächen (16b, 17b; 16a, 17a) der anderen Antriebseinheit (2b, 2a) voneinander entfernen.

20. Antriebsvorrichtung nach Anspruch 18 oder 19, **dadurch gekennzeichnet, dass** die Verbindungsbru`cke (25) als Abgriffsglied für das Abgreifen der Antriebsbewegung ausgebildet ist.

21. Antriebsvorrichtung nach einem der Ansprüche 18 bis 20, **dadurch gekennzeichnet, dass** die Verbindungsbrücke (25) in ihrer Hubrichtung (24) derart federelastisch ist, dass geringfügige Relativbewegungen der Hubeinheiten (23a, 23b) ermöglicht werden.

22. Antriebsvorrichtung nach einem der Ansprüche 1 bis 21 als Antrieb für ein zur Steuerung von Fluidströmen dienendes Ventil.

## Claims

1. Drive device with one or more drive units (2a, 2b) containing two pressure-application bodies (4a, 5a; 4b, 5b) spaced apart from one another and on which are provided facing pressure-application surfaces (16a, 17a; 16b, 17b) which diverge in a driving direction (18a, 18b) and between which is located a travel unit (23a, 23b) fitting up against the pressure-application surfaces (16a, 17a; 16b, 17b) of both pressure-application bodies (4a, 5a; 4b, 5b), and also having drive means (15) to generate a mutual approach of the pressure-application bodies (4a, 5a; 4b, 5b) and a resulting displacement of the travel unit (23a, 23b) in the driving direction (18a, 18b) along the pressure-application surfaces (16a, 17a; 16b, 17b) to produce a drive movement which may be tapped.

2. Drive device according to claim 1, **characterised in that** the pressure-application surfaces (16a, 17a; 16b, 17b) of both pressure-application bodies (4a, 5a; 4b, 5b), viewed in an initial position further removed from one another, are inclined at an angle relative to the driving direction (18a, 18b).

3. Drive device according to claim 1 or 2, **characterised in that** the pressure-application surfaces (16a, 17a; 16b, 17b) of at least one of the pressure-application bodies (4a, 5a; 4b, 5b) have a linear and/or curved form in the driving direction (18a, 18b).

4. Drive device according to any of claims 1 to 3, **characterised in that** the pressure-application bodies (4a, 5a; 4b, 5b) are so designed that both pressure-application bodies (4a, 5a; 4b, 5b) move during the mutual approach movement of the pressure-application surfaces (16a, 17a; 16b, 17b).

5. Drive device according to any of claims 1 to 4, **characterised in that** the mutual approach movement of the pressure-application surfaces (16a, 17a; 16b, 17b) which may be generated by the drive means (15) is produced by a forced swivelling movement of at least one of the pressure-application bodies (4a, 5a; 4b, 5b).

6. Drive device according to claim 5, **characterised in that** the two pressure-application bodies (4a, 5a; 4b, 5b) are coupled together, able to swivel relative to one another, in a bearing zone (8), and extend away from the bearing zone (8) roughly parallel to one another, wherein they define a pressure-application space (22a, 22b) which at least partially accommodates the travel unit (23a, 23b) and is preferably open on the outer side opposite the bearing zone (8).

7. Drive device according to claim 5 or 6 **characterised in that**, to generate the approach movement of the pressure-application surfaces (16a, 17a; 16b, 17b) through drive means (15) placed between the pressure-application bodies (4a, 5a; 4b, 5b), tensile forces and/or compressive forces may be exerted on the pressure-application bodies (4a, 5a; 4b, 5b), wherein the tensile forces are initiated on the side of the pivot centre (32) of the pressure-application body or bodies (4a, 5a; 4b, 5b) facing the pressure-application surfaces (16a, 17a; 16b, 17b), and the compressive forces are initiated on the side of the pivot centre of the pressure-application body or bodies (4a, 5a; 4b, 5b) facing away from the pressure-application surfaces (16a, 17a; 16b, 17b).

8. Drive device according to claim 7 in combination with claim 6, **characterised in that** the drive means (15) are provided in the area of the bearing zone (8).

9. Drive device according to any of claims 1 to 8, **characterised in that** at least the mutual approach movement and preferably also the opposite resetting movement of the two pressure-application bodies (4a, 5a; 4b, 5b) is/are generated by drive means (15) actuable by electrical means or by fluid power.

10. Drive device according to claim 9, **characterised in that** electrically actuable drive means (15) are provided in the form of a piezoelectric transducer unit.

11. Drive device according to claim 10, **characterised in that** the piezoelectric transducer unit contains one or more stack translator units (28a, 28b).

12. Drive device according to claim 11, **characterised by** two stack translator units (28a, 28b) connected in parallel and simultaneously actuable in opposite directions to generate expediently both tensile and compressive forces.

13. Drive device according to any of claims 1 to 12, **characterised in that** the drive means (15) have at least one spring device (34, 35) to generate the resetting movement of the travel unit (23a, 23b) opposite to the driving movement.

14. Drive device according to claim 13, **characterised in that** at least one spring device (34, 35) acts on at least one pressure-application body (4a, 5a; 4b, 5b) and/or on the travel unit (23a, 23b).

15. Drive device according to any of claims 1 to 14, **characterised in that** the travel unit (23a, 23b) is formed by a roller body unit (36a, 36b) which, during the driving movement, rolls along the pressure-application surfaces (16a, 17a; 16b, 17b) of the pressure-application bodies (4a, 5a; 4b, 5b).

16. Drive device according to claim 15, **characterised in that** the roller body unit (36a, 36b) has at least two roller bodies (37, 38), able to rotate independently of one another and for example in the form of rollers, each abutting only one of the pressure-application surfaces (16a, 17a; 16b, 17b) of the two pressure-application bodies (4a, 5a; 4b, 5b).

17. Drive device according to claim 16, **characterised by** a coaxial arrangement of the roller body (37, 38) of the roller body unit (36a, 36b) and a corresponding arrangement of the pressure-application surfaces (16a, 17a; 16b, 17b) offset, relative to one another, to the side.

18. Drive device according to any of claims 1 to 17, **characterised by** two drive units (2a, 2b) combined to form a unit and with their pressure-application bodies (4a, 5a; 4b, 5b) combined in pairs to form rigid pressure-application elements (6, 7) in such a way that the pressure-application surfaces (16a, 17a; 16b, 17b) of the two drive units (2a, 2b) diverge towards opposite sides, facing away from one another, and their travel units (23a, 23b) are movement-coupled by a connecting bridge (25) in such a way that, in the driving movement of one travel unit (23a, 23b), the other travel unit (23b, 23a) is carried along with it.

19. Drive device according to claim 18, **characterised in that** the two pressure-application elements (6, 7) are mounted with the ability to swivel relative to one another in a bearing zone (8) provided in the transition zone between the two drive units (2a, 2b) in such a way that at least one pressure-application element (6, 7) may be induced by the drive means (15) to make a rocker-like movement in which the pressure-application surfaces (16a, 17a; 16b, 17b) approach one another, while at the same time the pressure-application surfaces (16a, 17a; 16b, 17b) of the other drive unit (2b, 2a) move away from one another.

20. Drive device according to claim 18 or 19, **characterised in that** the connecting bridge (25) is in the form of a tapping element for tapping the driving movement.

21. Drive device according to any of claims 18 to 20, **characterised in that** the connecting bridge (25) is spring-elastic in its direction of travel (24) in such a way that slight relative movements of the travel units (23a, 23b) are possible.

22. Drive device according to any of claims 1 to 21 as a drive for a valve for the control of fluid flows.

## Revendications

1. Mécanisme d'entraînement avec au moins une unité d'entraînement (2a, 2b) qui contient deux corps de sollicitation (4a, 5a ; 4b, 5b) espacés, sur lesquels sont prévues des surfaces de sollicitation (16a, 17a ; 16b, 17b) tournées l'une vers l'autre, qui divergent dans un sens d'entraînement (18a, 18b) et entre lesquelles se trouve une unité de levage (23a, 23b) reposant sur les surfaces de sollicitation (16a, 17a ; 16b, 17b) des deux corps de sollicitation (4a, 5a ; 4b, 5b), ainsi qu'avec des moyens d'entraînement (15) conçus pour rapprocher les corps de sollicitation (4a, 5a ; 4b, 5b) de manière à déplacer l'unité de levage (23a, 23b) dans le sens d'entraînement (18a, 18b) le long des surfaces de sollicitation (16a, 17a ; 16b, 17b) pour générer un mouvement d'entraînement pouvant être mesuré.

2. Mécanisme d'entraînement selon la revendication 1, **caractérisé en ce que** les surfaces de sollicitation (16a, 17a ; 16b, 17b) des deux corps de sollicitation (4a, 5a ; 4b, 5b), vu dans une position de base plus éloignée l'un de l'autre, présentent une surface inclinée par rapport au sens d'entraînement (18a, 18b).

3. Mécanisme d'entraînement selon la revendication 1 ou 2, **caractérisé en ce que** la surface de sollicitation (16a, 17a ; 16b, 17b) d'au moins un corps de sollicitation (4a, 5a ; 4b, 5b) possède dans le sens d'entraînement (18a, 18b) une surface plane et/ou courbée.

4. Mécanisme d'entraînement selon l'une quelconque des revendications 1 à 3, **caractérisé en ce que** les corps de sollicitation (4a, 5a ; 4b, 5b) sont réalisés de sorte à se déplacer lors du mouvement de rapprochement des surfaces de sollicitation (16a, 17a ; 16b, 17b).

5. Mécanisme d'entraînement selon l'une quelconque des revendications 1 à 4, **caractérisé en ce que** le mouvement de rapprochement pouvant être suscité par les moyens d'entraînement (15) des surfaces de sollicitation (16a, 17a ; 16b, 17b) est généré par un mouvement de pivotement forcé au moins d'un corps de sollicitation (4a, 5a ; 4b, 5b).

6. Mécanisme d'entraînement selon la revendication 5, **caractérisé en ce que** les deux corps de sollicitation (4a, 5a ; 4b, 5b) sont couplés entre eux à pivotement l'un par rapport à l'autre dans une zone formant palier (8) et dépassent à peu près dirigés dans le même sens de la zone formant palier (8), ceux-ci délimitant un espace de sollicitation (22a, 22b) de préférence ouvert sur le côté extérieur opposé à la zone formant palier (8) et recevant au moins partiellement l'unité de levage (23a, 23b).

7. Mécanisme d'entraînement selon la revendication 5 ou 6, **caractérisé en ce que** des forces de traction et/ou des forces de pression peuvent être exercées sur les corps de sollicitation (4a, 5a ; 4b, 5b) pour susciter le rapprochement des surfaces de sollicitation (16a, 17a ; 16b, 17b) par des moyens d'entraînement (15) placés entre les corps de sollicitation (4a, 5a ; 4b, 5b), les forces de traction étant exercées sur le côté tourné vers les surfaces de sollicitation (16a, 17a ; 16b, 17b) et les forces de pression sur le côté éloigné des surfaces de sollicitation (16a, 17a ; 16b, 17b) du centre de pivotement (32) de l'au moins un corps de sollicitation (4a, 5a ; 4b, 5b).

8. Mécanisme d'entraînement selon la revendication 7 en liaison avec la revendication 6, **caractérisé en ce que** les moyens d'entraînement (15) sont prévus dans la zone de la zone formant palier (8).

9. Mécanisme d'entraînement selon l'une quelconque des revendications 1 à 8, **caractérisé en ce qu'**au moins le mouvement de rapprochement et de préférence également le mouvement de rappel opposé des deux corps de sollicitation (4a, 5a ; 4b, 5b) sont suscités par des moyens d'entraînement (15) pouvant être actionnés électriquement et/ou par une force fluidique.

10. Mécanisme d'entraînement selon la revendication 9, **caractérisé en ce que** des moyens d'entraînement (15) pouvant être actionnés électriquement sont prévus sous la forme d'un dispositif convertisseur piézoélectrique.

11. Mécanisme d'entraînement selon la revendication 10, **caractérisé en ce que** le dispositif convertisseur piézoélectrique contient une ou plusieurs unités de translation empilées (28a, 28b).

12. Mécanisme d'entraînement selon la revendication 11, **caractérisé par** deux unités de translation empilées (28a, 28b) montées parallèlement et pouvant être actionnées en sens contraires en même temps pour générer des forces de traction ainsi que des forces de pression appropriées.

13. Mécanisme d'entraînement selon l'une quelconque des revendications 1 à 12, **caractérisé en ce que** les moyens d'entraînement (15) présentent au moins un dispositif à ressort (34, 35) pour générer le mouvement de rappel opposé au mouvement d'entraînement de l'unité de levage (23a, 23b).

14. Mécanisme d'entraînement selon la revendication 13, **caractérisé en ce qu'**au moins un dispositif à ressort (34, 35) agit sur au moins un corps de sollicitation (4a, 5a ; 4b, 5b) et/ou sur l'unité de levage (23a, 23b).

15. Mécanisme d'entraînement selon l'une quelconque des revendications 1 à 14, **caractérisé en ce que** l'unité de levage (23a, 23b) est constituée d'une unité d'éléments roulants (36a, 36b) qui roule lors du mouvement d'entraînement sur les surfaces de sollicitation (16a, 17a ; 16b, 17b) des corps de sollicitation (4a, 5a ; 4b, 5b).

16. Mécanisme d'entraînement selon la revendication 15, **caractérisé en ce que** l'unité d'éléments roulants (36a, 36b) dispose d'au moins deux éléments roulants (37, 38) rotatifs indépendamment l'un de l'autre et conçus par exemple en forme de rouleau, qui ne reposent respectivement que sur l'une des surfaces de sollicitation (16a, 17a ; 16b, 17b) des deux corps de sollicitation (4a, 5a ; 4b, 5b).

17. Mécanisme d'entraînement selon la revendication 16, **caractérisé par** une disposition coaxiale des éléments roulants (37, 38) de l'unité d'éléments roulants (36a, 36b) et une disposition décalée latéralement en conséquence l'une par rapport à l'autre des surfaces de sollicitation (16a, 17a ; 16b, 17b).

18. Mécanisme d'entraînement selon l'une quelconque des revendications 1 à 17, **caractérisé par** deux unités d'entraînement (2a, 2b) réunies pour former une unité de construction, dont les corps de sollicitation (4a, 5a ; 4b, 5b) sont réunis par paire pour former deux éléments de sollicitation (6, 7) rigides en flexion de telle sorte que les surfaces de sollicitation (16a, 17a ; 16b, 17b) des deux unités d'entraînement (2a, 2b) divergent vers des côtés opposés, éloignés l'un de l'autre, et leurs unités de levage (23a, 23b) sont couplées en déplacement par un pont de liaison (25) de telle sorte que lors du mouvement d'entraînement de respectivement une unité de levage (23a, 23b), l'autre unité de levage (23a, 23b) respective est verrouillée.

19. Mécanisme d'entraînement selon la revendication 18, **caractérisé en ce que** les deux éléments de sollicitation (6, 7) sont montés à pivotement l'un par rapport à l'autre dans une zone formant palier (8) prévue dans la zone de transition entre les deux unités d'entraînement (2a, 2b) de telle sorte qu'au moins un élément de sollicitation (6, 7) puisse être amené par les moyens d'entraînement (15) à un déplacement de type basculement, lors duquel les surfaces de sollicitation (16a, 17a ; 16b, 17b) s'approchent les unes des autres et les surfaces de sollicitation (16b, 17b ; 16a, 17a) de l'autre unité d'entraînement (2b, 2a) s'éloignent les unes des autres en même temps.

20. Mécanisme d'entraînement selon la revendication 18 ou 19, **caractérisé en ce que** le pont de liaison (25) est réalisé comme un élément de prise pour le prélèvement du mouvement d'entraînement.

21. Mécanisme d'entraînement selon l'une quelconque des revendications 18 à 20, **caractérisé en ce que** le pont de liaison (25) est élastique dans son sens de levage (24) de sorte à permettre de minimes mouvements relatifs des unités de levage (23a, 23b).

22. Mécanisme d'entraînement selon l'une quelconque des revendications 1 à 21 servant d'entraînement pour une soupape servant à commander des flux de fluide.
